(19) Europäisches Patentamt
European Patent Office
Office européen des brevets

(11) EP 1 947 130 B1

(12) **EUROPEAN PATENT SPECIFICATION**

(45) Date of publication and mention of the grant of the patent:
**07.12.2011 Bulletin 2011/49**

(21) Application number: **06797520.1**

(22) Date of filing: **06.09.2006**

(51) Int Cl.:
***C08G 59/68*** (2006.01) ***C08G 65/10*** (2006.01)
***C08J 5/24*** (2006.01) ***C08G 59/20*** (2006.01)
***C08G 59/72*** (2006.01) ***C08L 63/00*** (2006.01)

(86) International application number:
**PCT/JP2006/317624**

(87) International publication number:
**WO 2007/034679 (29.03.2007 Gazette 2007/13)**

(54) **RESIN COMPOSITION FOR RADIATION CURING AND PREPREG**

HARZZUSAMMENSETZUNG FÜR DIE STRAHLENHÄRTUNG UND PREPREG

COMPOSITION DE RESINE POUR DURCISSEMENT PAR IRRADIATION ET PREIMPREGNE

(84) Designated Contracting States:
**DE ES FR GB IT**

(30) Priority: **22.09.2005 JP 2005274850**

(43) Date of publication of application:
**23.07.2008 Bulletin 2008/30**

(73) Proprietor: **Toho Tenax Co., Ltd.**
**Chiyoda-ku**
**Tokyo (JP)**

(72) Inventor: **YOKOE, Yasuyuki**
**Shizuoka 411-8720 (JP)**

(74) Representative: **HOFFMANN EITLE**
**Patent- und Rechtsanwälte**
**Arabellastraße 4**
**81925 München (DE)**

(56) References cited:
**JP-A- 2000 191 751**
**JP-A- 2001 081 290**
**JP-A- 2004 051 689**
**JP-A- 2004 277 481**
**JP-A- 2004 277 481**
**JP-A- 2005 248 118**
**JP-A- 2005 248 118**
**JP-A- 2005 281 606**
**JP-A- 2005 281 611**
**JP-A- 2006 096 872**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 947 130 B1

## Description

The present invention relates to a radiation-curing resin composition and a prepreg comprising this resin composition and a fiber reinforcement.

In recent years, fiber materials such as carbon fiber, glass fiber, and aramid fiber have been made into composites with various types of matrix resins, and the fiber-reinforced composite materials thus obtained have been widely used in various types of fields and applications. In particular, they have recently been used as excellent structural members/components in the aerospace field where high levels of mechanical properties, heat resistance, etc. are required. With regard to a process for producing a composite material/member for such applications, a process in which a prepreg comprising a thermosetting resin and a fiber reinforced material is multiply layered and heat- and pressure-cured by autoclave molding is generally carried out. However, this process has the problems that the molding cost is generally high and the energy consumption required for molding is large.

The development of production techniques that can replace the autoclave method has therefore been carried out, and as one thereof there is a method in which curing is carried out by a crosslinking reaction involving irradiating a resin containing a photopolymerization initiator with radiation such as an electron beam. Such a method is expected to have many advantages such as energy saving or reduction in processing time.

(Patent Publication 1) JP-A-11-193322 (JP-A denotes a Japanese unexamined patent application publication.)
(Nonpatent Publication 1) 'Research into Leading Edge Aircraft Component/Material Technology' Result Report No. 1605, Published by the Society of Japanese Aerospace Companies (March, 2002)

However, in a conventionally known combination of a resin and an initiator, for example, a combination of an epoxy resin and a cationic photoreaction initiator, reactivity between the two is not always sufficient and it is difficult to attain a sufficient degree of curing for a crosslinking resin while exploiting merits such as energy saving or reduction in curing time. In the case of a prepreg formed from such a combination of a resin and an initiator, there is the problem that the radiation curability is degraded due to the proportion of the resin decreasing.

JP 2005 248118 A discloses an epoxy resin composition (and its use in prepreg), which contains an epoxy resin having a naphthalene structure and an aromatic iodonium salt such as diphenyl iodonium tetrakis(pentaflurophenyl) borate as a polymerization initiator (see claim 1 and paragraph [0059]). As disclosed at paragraph [0083] of JP 2005 248118 A, hardening can be performed by the energy of an electron beam.

It is an object of the present invention to provide a radiation-curing resin composition having excellent reactivity, and a prepreg comprising the resin composition and a fiber reinforced material, the prepreg being used in particular for molding a composite material/member that can be used in the aerospace field.

When a radiation-curing resin composition comprises a resin on its own, it is generally cured by irradiation with radiation and gives a crosslinked/cured resin having excellent mechanical properties. However, when a prepreg is formed therefrom with a fiber reinforced material, the radiation curability is degraded due to the proportion of the resin decreasing, and it is difficult to completely satisfy the properties required for composite materials/components in the aerospace field where high levels of mechanical performance/properties are required. The present inventors have found that by combining a resin that, among epoxy and oxetane resins, has a specific structure with a specific viscosity adjusting agent that does not adversely affect the radiation curing reactivity, a prepreg having excellent radiation curability can be obtained, and a composite material/component employing same can satisfy the required properties.

An object of the present invention has been attained by a radiation-curing resin composition comprising a resin component comprising an epoxy resin and/or oxetane resin having a naphthalene structure or a biphenyl structure, a polymerization initiator represented by Formula (1) below at 0.005 to 0.5 mol per kg of the resin component, and a viscosity adjusting agent, the resin composition having a viscosity at 50°C of at least 50 Pa·s. Another object of the present invention has been attained by a prepreg comprising a fiber reinforced material impregnated with the radiation-curing resin composition.

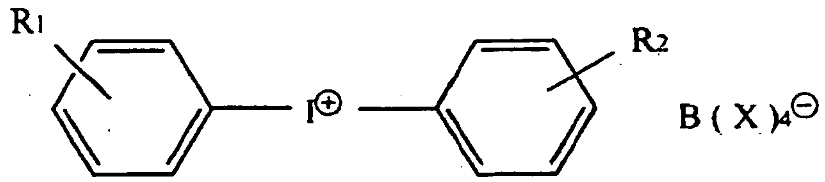

(1)

X : $C_6F_5$, $C_6H_4pOCF_3$, $C_6H_3(mCF_3)_2$

$R_1$, $R_2$: H or an alkyl group

Since the radiation-curing resin composition of the present invention has high reactivity, the exposure dose can be small, and the power consumption is low. Furthermore, since high speed curing is possible, this is advantageous in terms of cost. Furthermore, since the amount of initiator used may be small, this is advantageous in terms of cost. Moreover, a prepreg comprising this resin composition and a fiber reinforced material such as carbon fiber or aramid fiber has very high radiation curability, and a composite material/member molded therefrom by irradiation with radiation has a sufficient degree of curing and excellent mechanical or thermal properties. In accordance with the present invention, a composite material/member showing the same level of performance as one obtained by a thermal cure method can be obtained.

The present invention is a radiation-curing resin composition comprising a resin component comprising an epoxy resin having a naphthalene structure or a biphenyl structure and/or an oxetane resin having a naphthalene structure or a biphenyl structure, a polymerization initiator represented by Formula (1) above at 0.005 to 0.5 mol, and preferably 0.01 to 0.1 mol, per kg of the resin component, and a viscosity adjusting agent, the resin composition having a viscosity at 50°C of at least 50 Pa·s, and preferably 50 to 400 Pa·s.

Examples of the epoxy resin having a naphthalene structure include 1,6-bis(2,3-epoxypropoxy)naphthalene (product name: HP-4032, manufactured by Dainippon Ink and Chemicals, Incorporated) and 1-chloro-2,3-epoxypropane 2,7-naphthalenediol formaldehyde polycondensate (product name: EXA-4700, manufactured by Dainippon Ink and Chemicals, Incorporated), and examples of the epoxy resin having a biphenyl structure include YX4000, YX4000H, YL6121H, YL6640, and YL6677- (product names: manufactured by Japan Epoxy Resin Co., Ltd). 1,6-Bis(2,3-epoxypropoxy)naphthalene is preferable. Examples of the oxetane resin having a naphthalene structure or a biphenyl structure include bis(1-ethyl-3-oxetanylmethoxy)naphthalene, 4,4'-bis[(3-ethyloxetan-3-yl)methoxy]biphenyl (product name: 4,4'-BPOX, manufactured by Toagosei Co., Ltd.), and 4,4'-bis[(3-ethyl-3-oxetanyl) methoxymethyl]biphenyl (product name: OXBP, manufactured by Toagosei Co., Ltd.). The oxetane resin is a 4-membered ring ether compound, which has one more carbon than the epoxy resin, and in the same way as the epoxy resin is a cationic photocuring type resin. The oxetane resin may be produced by a known method from an oxetane alcohol or an oxetane chloride, and the oxetane resin having a naphthalene structure or a biphenyl structure may be obtained by a method described in, for example, JP-A-2002-322268.

In the present invention, the epoxy resin having a naphthalene structure or a biphenyl structure and the oxetane resin having a naphthalene structure or a biphenyl structure may be used on their own or as a mixture. Furthermore, in the present invention, these resin components are combined with a specific viscosity adjusting agent that does not adversely affect the radiation-curing reactivity, and the viscosity at 50°C of the resin composition thus obtained is adjusted to at least 50 Pa.s, and preferably 50 to 400 Pa·s. The mixing ratio of the resin component and the viscosity adjusting agent is not particularly limited as long as the viscosity at 50°C is at least 50 Pa·s, but it is normally preferable that the resin component is at least 50 wt %.

The viscosity adjusting agent of the present invention is not particularly limited as long as it does not adversely affect the radiation-curing reactivity, and a known compound may be used. Specific examples thereof include silicon dioxide, a phenoxy resin, a thermoplastic resin, and mixtures thereof.

As the thermoplastic resin, it is preferable to use one type or two or more types of compounds selected from a polyether ether ketone (PEEK) resin, a polyether imide (PEI) resin, a polyacrylate resin, a polysulfone resin, a nylon resin, a polyester resin, an ABS resin, an acrylic resin, a polyethylene resin, a polystyrene resin, a polypropylene resin, a polyvinyl chloride resin, a polycarbonate resin, a polyether sulfone resin, a polyamide imide resin, a polyether imide resin, and a thermoplastic polyimide resin.

In the present invention, the resin component comprising the epoxy resin having a naphthalene structure or a biphenyl structure and/or the oxetane resin having a naphthalene structure or a biphenyl structure is used by adding and mixing a polymerization initiator represented by Formula (1) above. The amount thereof used is 0.005 to 0.5 mol, and preferably 0.05 to 0.1 mol per kg of the resin component. In the present invention, as long as this polymerization initiator is used, it is not particularly necessary to use another curing agent, curing promoter, etc., but they may be used in an appropriate amount if necessary. Needless to say, a normal flame retardant, flame retardant adjuvant, powdered reinforcing material, coloring agent, etc. may be used as necessary.

In Formula (1) above, $R_1$ and $R_2$ independently denote hydrogen or an alkyl group. As the alkyl group, a lower alkyl group having 1 to 5 carbons such as a methyl group, an ethyl group, or an isopropyl group is preferable. X denotes a pentafluorophenyl group, a paratrifluoromethoxyphenyl group, or a dimeta(trifluoromethyl)phenyl group. In the present invention, (tolylcumyl)iodonium tetrakis(pentafluorophenyl)borate, for which $R_1$ of Formula (1) is an isopropyl group, $R_2$ is a methyl group, and X is a $C_6F_5$ group, is particularly preferable.

A prepreg, which is another embodiment of the present invention, is obtained by impregnating a fiber reinforcement with a radiation-curing resin composition comprising a resin component comprising the above-mentioned epoxy resin and/or oxetane resin, a polymerization initiator represented by Formula (1) above at 0.005 to 0.5 mol per kg of the

resin component, and a viscosity adjusting agent, the viscosity of the resin composition at 50°C being at least 50 Pa·s. The content of the resin component in the prepreg is normally 10 to 70 wt %, and preferably 20 to 50 wt %.

The form of the fiber reinforcement is not particularly limited, and it is preferable to use one in which a fiber material is paralleled in one direction to give a sheet form, one in which these sheets are layered so as to be, for example, perpendicular to each other, one in which fiber materials are formed into a woven, nonwoven, etc. cloth, or one in a knitted, etc. strand form. The types of fiber reinforcements include inorganic fibers, organic fibers, metal fibers, or mixtures thereof. Specific examples of the inorganic fiber include carbon fiber, graphite fiber, silicon carbide fiber, alumina fiber, tungsten carbide fiber, boron fiber, and glass fiber. Examples of the organic fiber include aramid fiber, high density polyethylene fiber, polyamide fiber, and polyester fiber. Carbon fiber and aramid fiber are preferable.

'Impregnation' in the present invention means a state in which a resin component is attached between the surface of the fiber reinforcement and the fiber material, and the two are bonded and integrated. With regard to a method for impregnating the fiber reinforcement with the resin composition, there can be cited a melt impregnation method, a powder method, a solution impregnation method, etc. In order to allow mechanical properties to be fully exhibited, the melt impregnation method is preferable.

In order to enhance the adhesive force between the fiber reinforcement and the resin, when a sizing agent, an oil, a glue, etc. for the fibers are attached to the fiber reinforcement, it is desirable to remove them in advance. If necessary, a treatment for spreading filaments of the fiber material or a surface treatment by electrolysis or with a chemical may be carried out in advance.

By irradiating the prepreg obtained in the present invention with radiation so as to crosslink/cure the resin, a composite material/component may be formed. In the present invention, the radiation means ionizing radiation such as UV rays, an electron beam, gamma rays, or X-rays. Since the resin composition of the present invention has high reactivity, when it is made into a prepreg and then irradiated with such radiation, even with a low exposure dose a crosslinked resin with a high degree of curing is obtained. Among the types of radiation, UV rays and an electron beam are preferably used. For both irradiation with UV rays and an electron beam, the exposure dose varies depending on the thickness, shape, etc. of the irradiated object, and in the case of irradiation with an electron beam, it is normally irradiated at 5 to 150 kGy, and preferably 30 to 60 kGy. It is desirable that the irradiation temperature is normal temperature and the irradiation atmosphere is air or an inert gas.

The present invention is specifically explained below by reference to Examples and Comparative Examples. The viscosity of a resin was evaluated based on a dynamic viscoelasticity measurement. Measurement of dynamic viscoelasticity was carried out under conditions of a frequency of 1 Hz and a strain of 0.1 deg. The degree of cure of a composite material (CFRP) obtained was calculated based on the amount of heat generated by a sample during curing, which was obtained based on differential scanning calorimetry (DSC). DSC measurement was carried out in accordance with JIS K 7122 under conditions of a rate of temperature increase of 10°C/min and a flow rate in a nitrogen atmosphere of 50 mL/min.

The Tg of a resin and a CFRP was evaluated based on thermomechanical analysis (TMA). TMA measurement was carried out in accordance with JIS K 7197 under conditions of sample dimensions of 3 mm square, a load of 1 gf, a rate of temperature increase of 3°C/min and a flow rate in a nitrogen atmosphere of 50 mL/min.

Interlaminar shear strength (SBS) of a CFRP was carried out in accordance with ASTM D2344 M-00 with a crosshead speed of a tester of 1.0 mm/min. Test piece dimensions were 12.0 mm width, 6.0 mm thickness, and 40.0 mm length. Interlaminar shear strength (SBS) was calculated using the equation below.

$$F = (P/(W \times D)) \times 0.75$$

Here, F is the strength (MPa), P is the breaking load (N), W is the width of the test piece (mm), and D is the thickness (mm) of the test piece.

A tensile test of a CFRP was carried out in accordance with ASTM D3039 using a test piece with a tab. A compression test was carried out in accordance with SACMA SRM 1 R. A shear test was carried out in accordance with ASTM D3518. An open-hole compression (OHC) test was carried out in accordance with SACMA SRM 3R (ASTM D6484).

Components of resin compositions of Examples 1 to 4 and Comparative Examples 1 and 2 are shown in Table 1. Parts and % for the components are all on a weight basis.

Example 1

As a polymerization initiator, 0.01 mol/kg of (tolylcumyl)iodonium tetrakis(pentafluorophenyl)borate (RHODORSIL PHOTOINITIATOR 2074, manufactured by Rhodia) was added to and mixed with a mixture of 100 parts of a naphthalene structure type glycidyl ether epoxy resin (HP-4032, manufactured by Dainippon Ink and Chemicals, Incorporated) and 14 parts of a phenoxy resin (PKHP-200, manufactured by Phenoxy Specialties), thus giving a radiation-curing resin composition.

Examples 2 to 4

5 parts (Example 2), 10 parts (Example 3), and 20 parts (Example 4) of polyether sulfone (PES, manufactured by Sumika Chemtex Co., Ltd.), which is a thermoplastic resin, and 0.01 mol/kg of (tolylcumyl)iodonium tetrakis(pentafluorophenyl)borate as in Example 1 as a polymerization initiator were added to and mixed with a mixture of 100 parts of the naphthalene structure type glycidyl ether epoxy resin and 14 parts of the phenoxy resin as in Example 1, thus giving radiation-curing resin compositions (ref. components of Table 1).

Comparative Example 1

0.01 mol/kg of the same polymerization initiator as in Example 1 was added to and mixed with 100 parts of the same naphthalene structure type glycidyl ether epoxy resin as in Example 1, thus giving a radiation-curing resin composition.

Comparative Example 2

0.01 mol/kg of the same polymerization initiator as in Example 1 was added to and mixed with a mixture of 70 parts of a low molecular weight bisphenol A type glycidyl ether epoxy resin (Epikote 834, manufactured by Japan Epoxy Resin Co., Ltd), 30 parts of a high molecular weight bisphenol A type glycidyl ether epoxy resin (AER6002, manufactured by Japan Epoxy Resin Co., Ltd), and 15 parts of a thermoplastic resin polyether imide (PEI-1000-1000, manufactured by GE Plastics Japan Ltd.), thus giving a radiation-curing resin composition.

With regard to each of the radiation-curing resin compositions, the glass transition temperature, viscosity, and feasibility of production of a prepreg were evaluated, and the results are given in Table 2. With regard to that of Comparative Example 1, the viscosity was too low, and it was therefore difficult to produce a prepreg using the resin. In Table 2, resin compositions (Examples 1 to 4, Comparative Example 1) comprising a resin having a rigid structure as a resin component had a high Tg compared with another resin composition (Comparative Example 2). This suggests that the Tg depends on the rigidity and the degree of crosslinking of molecular chains of a crosslinked resin. In order to obtain a radiation resin composition having a high Tg, it is desirable to select a resin having a rigid chemical structure or a resin that gives a high degree of crosslinking (a polyfunctional resin or a resin having a low epoxy equivalent weight).

Each of the radiation curing resin compositions was placed in a 10 cm square and 3 mm thick silicone rubber mold, and cured at exposure doses of 10 kGy and 30 kGy using an electron beam irradiator manufactured by Nuclear Fuel Industries, Ltd. (acceleration voltage 10 MeV, equipped with a Bremsstrahlung X-ray converter). The degree of cure of a cured resin was as shown in Table 2. From Table 2, it can be seen that the electron beam curability of a resin depends on its viscosity, and the lower the viscosity, the higher the curability. However, when the viscosity is too low, as in Comparative Example 1, it is difficult to produce a prepreg using that resin, and this is not suitable in the present invention.

A carbon fiber sheet (IM600-24K, manufactured by Toho Tenax Co., Ltd, filament denier 0.83 d, 2400 filaments being paralleled) was impregnated with the resin composition by a melt impregnation method (weight per unit area 150 $g/m^2$) so as to give a resin content of 35%, thus giving a prepreg of the present invention.

20 cm square test pieces were cut out therefrom, 40 sheets thereof were layered with the all layers at 0° (same direction), and the resin was crosslinked/cured by irradiation with an electron beam at 60 to 150 kGy (joule/kg) using the same electron beam irradiator as above. As long as the dose absorbed by a prepreg is the same, even if the electron acceleration method (continuous wave, pulse wave) or the acceleration voltage is different, the mechanical properties are the same. A composite material thus obtained could fully withstand practical use. The electron-beam curability of the prepreg, and the Tg and interlaminar shear strength of the composite material obtained are given in Table 3.

In Table 3, it can be seen that resin compositions (Examples 1 to 4, Comparative Example 2) that could be made into a prepreg almost completely cured at an electron beam exposure dose of 120 kGy. Furthermore, data for thermal curing (conditions: 180°C × 2 hours) are also shown in Table 3, and it can be seen that there was hardly any difference in the Tg of the composite material (CFRP) cured by an electron beam from that of a thermally cured CFRP. Moreover, from Table 3 it can be seen that there was hardly any difference in the interlaminar shear strength of the CFRP cured by an electron beam from that of a thermally cured CFRP. It is surmised that these results for the Tg and interlaminar shear strength are due to the resin being almost completely cured by irradiation with an electron beam. Unless the resin is completely cured, the resin generally does not exhibit its intrinsic potential performance.

Table 4 shows the results of evaluation of various CFRP properties of CFRPs obtained from prepregs employing the resin compositions of Example 1 and Comparative Example 2. Example 1 gave high values for the properties other

than shear. In particular, it gave a very high value for OHC, which is a design index for an aircraft material, thus showing that this material is promising for application to an aircraft.

A result of comparing the strength of an aluminum alloy (7075-T73), which is currently most commonly used as an aircraft structural material, and a CFRP obtained from a prepreg employing the resin composition of Example 1 is shown in Table 5. As properties used as a design index for a structural member of an aircraft, the compressive strength of the aluminum alloy and the open-hole compressive strength of the CFRP were compared (due to a defect (hole) being present, the open-hole compressive strength is lower than the compressive strength). The specific strength (RTD) of the open-hole compressive strength of the CFRP at 23°C in a dry atmosphere was 195, which was much higher than the specific strength of 148 for the compressive strength of the aluminum alloy, and the specific strength (HTW) thereof at 82°C under wet conditions was 148, which was similar to that of the aluminum alloy. This suggests that the material of Example 1 is very promising for reducing the weight of an aircraft. Although it is not shown specifically as an example, in the case of an oxetane resin having a naphthalene structure, since its chemical structure after a curing reaction is similar to that of an epoxy resin, almost the same results as those of the epoxy resin Examples are expected.

(Table 1)

| | Resin component | | | Viscosity adjusting agent | | |
|---|---|---|---|---|---|---|
| | | | | Phenoxy resin | Thermoplastic resin | |
| | HP-4032 | Ep834 | AER6002 | PKHP-200 | PES | PEI |
| Ex. 1 | 100 | - | - | 14 | - | - |
| Ex. 2 | 100 | - | - | 14 | 5 | - |
| Ex. 3 | 100 | - | - | 14 | 10 | - |
| Ex. 4 | 100 | - | - | 14 | 20 | - |
| Comp. Ex. 1 | 100 | - | - | - | - | - |
| Comp. Ex. 2 | - | 70 | 30 | - | - | 15 |

(Table 2)

| | Tg(°C) | Viscosity (Pa·S) | Feasibility of production of prepreg | Electron beam curing properties of resin | |
|---|---|---|---|---|---|
| | | | | Degree of curing (%) | |
| | DSC measurement | 50°C | | 10 kGy | 30 kGy |
| Ex. 1 | 175 | 72 | Good | 100 | 100 |
| Ex. 2 | 170 | 134 | Good | 100 | 100 |
| Ex. 3 | 160 | 205 | Good | - | 98 |
| Ex. 4 | 140 | 446 | Good | - | 39 |
| Comp. Ex. 1 | 212 | 1 | Poor | 100 | 100 |
| Comp. Ex. 2 | 130 | 188 | Good | 100 | 100 |

(Table 3)

| | Electron beam curing properties of prepreg | | | | Tg (°C) | | Interlaminar shear strength (MPa) | |
|---|---|---|---|---|---|---|---|---|
| | Degree of curing (%) | | | | TMA | | Thermal curing | Electron beam curing |
| | 60 kGy | 90 kGy | 120 kGy | 150 kGy | Thermal curing | Electron beam curing | 180°C | 120 kGy |
| Ex. 1 | 61 | 87 | 99 | 96 | 175 | 170 | 82 | 79 |
| Ex. 2 | 96 | 96 | 97 | 97 | 170 | 170 | 81 | 74 |
| Ex. 3 | | | 98 | | 160 | 155 | 80 | |
| Ex. 4 | | | 98 | | 140 | 135 | 80 | |
| Comp. Ex. 1 | - | - | - | - | - | - | - | - |
| Comp. Ex. 2 | 99 | 99 | 99 | 99 | 130 | 127 | 70 | 65 |

(Table 4)

| | Curing method | Tg | SBS | Tensile | Compression | Shear | OHC |
|---|---|---|---|---|---|---|---|
| | | °C | MPa | MPa | MPa | MPa | MPa |
| Ex. 1 | Thermal curing | 175 | 82 | | | | |
| | Electron beam curing | 170 | 77 | 2860 | 1320 | 72 | 292 |
| Ex.2 | Thermal curing | 130 | 70 | | | | |
| | Electron beam curing | 130 | 65 | 2820 | 1240 | 94 | 257 |

(Table 5)

| Sample | Aluminum alloy (7075-T73) | Electron beam curing composite material Ex. 1 | |
|---|---|---|---|
| Evaluation item/conditions | Compressive strength | Open-hole compressive strength | |
| | - | RTD (23°C dry) | HTW (82°C wet) |
| Strength | 414 MPa | 292 MPa | 222 MPa |
| Density | 2.8 | 1.5 | |
| Specific strength | 148 | 195 | 148 |

Industrial Applicability

A composite material/member molded by irradiation with radiation using a prepreg comprising the radiation-curing resin composition of the present invention and a fiber reinforcement such as carbon fiber or aramid fiber has very high radiation curability, a sufficient degree of curing, and excellent mechanical or thermal properties. In accordance with the present invention, a composite material/member having performance at on the order of 80% of that of a thermally cured CFRP currently used in aircraft and having a level that enables an aluminum alloy to be replaced can be obtained. The composite material/member thus obtained is therefore used widely not only in the aerospace field but also generally in other industrial fields.

**Claims**

1. An electron beam or X-ray curing resin composition comprising a resin component comprising an epoxy resin and/or oxetane resin having a naphthalene structure or a biphenyl structure, a polymerization initiator represented by Formula (1) below at 0.005 to 0.5 mol per kg of the resin component, and a viscosity adjusting agent comprising a phenoxy resin and/or a polyether sulfone resin, the resin composition having a viscosity at 50°Cwhen determined based on a dynamic viscoelasticity measurement under conditions of a frequency of 1 Hz and a strain of 0.1 deg, in the range of 50 to 400 Pa·s.

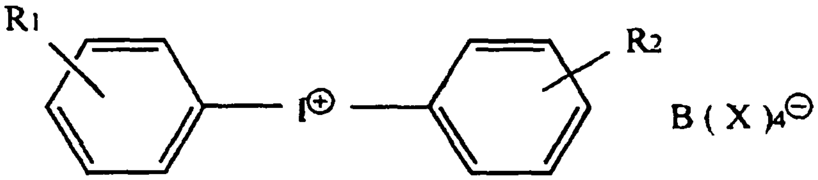

(1)

X : C6$F_5$, $C_6H_4pOCF_3$, $C_6H_3(mCF_3)_2$
$R_1$, $R_2$: H or an alkyl group

2. The electron beam or X-ray curing resin composition according to Claim 1, wherein the amount of polymerization initiator is 0.01 to 0.1 mol per kg of the resin component.

3. The electron beam or X-ray curing resin composition according to Claim 1 or 2, wherein the polymerization initiator is one for which both $R_1$ and $R_2$ in Formula (1) are $C_{1-5}$ alkyl groups.

4. The electron beam or X-ray curing resin composition according to Claim 1 or 2, wherein the polymerization initiator is (tolylcumyl)iodonium tetrakis(pentafluorophenyl)borate, for which $R_1$ in Formula (1) is an isopropyl group, $R_2$ is a methyl group, and X is a $C_6F_5$ group.

5. A prepreg obtained by impregnating a fiber reinforcement with an electron beam or X-ray curing resin composition comprising a resin component comprising an epoxy resin and/or oxetane resin having a naphthalene structure or a biphenyl structure, a polymerization initiator represented by Formula (1) below at 0.005 to 0.5 mol per kg of the resin component, and a viscosity adjusting agent comprising a phenoxy resin and/or a polyether sulfone resin, the resin composition having a viscosity at 50°Cwhen determined based on a dynamic viscoelasticity measurement under conditions of a frequency of 1 Hz and a strain of 0.1 deg, in the range of 50 to 400 Pa·s.

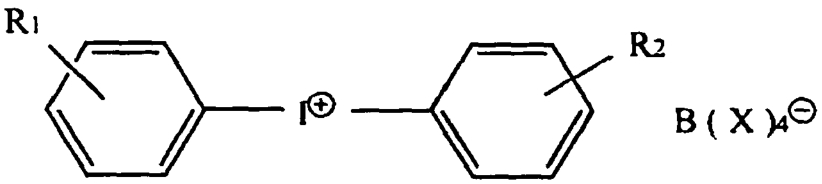

(1)

X : $C_6F_5$, $C_6H_4pOCF_3$, $C_6H_3(mCF_3)_2$
$R_1$, $R_2$: H or an alkyl group

6. The prepreg according to Claim 7, wherein the amount of polymerization initiator is 0.01 to 0.1 mol per kg of the resin component.

7. The prepreg according to Claim 7 or 8, wherein the polymerization initiator is one for which both $R_1$ and $R_2$ in Formula (1) are $C_{1-5}$ alkyl groups.

**8.** The prepreg according to Claim 7 or 8, wherein the polymerization initiator is (tolylcumyl)iodonium tetrakis(pentafluorophenyl)borate, for which $R_1$ in Formula (1) is an isopropyl group, $R_2$ is a methyl group, and X is a $C_6F_5$ group.

## Patentansprüche

**1.** Elektrodenstrahl- oder Röntgenstrahl-härtbare Harzzusammensetzung, die eine Harzkomponente umfasst, welche ein Epoxyharz und/oder Oxetanharz, das eine Naphthalinstruktur oder eine Biphenylstruktur aufweist, einen Polymerisationsstarter der Formel (1) unten mit 0,005 bis 0,5 mol/kg der Harzkomponente, und ein Viskositätseinstellmittel umfasst, das ein Phenoxyharz und/oder ein Polyethersulfonharz umfasst, die Harzzusammensetzung bei 50°C eine Viskosität in dem Bereich von 50 bis 400 Pa·s aufweist, wenn sie auf Grundlage einer dynamischen Viskoeleastizitätsmessung unter den Bedingungen einer Frequenz von 1 Hz und einer Spannung von 0,1° bestimmt wird

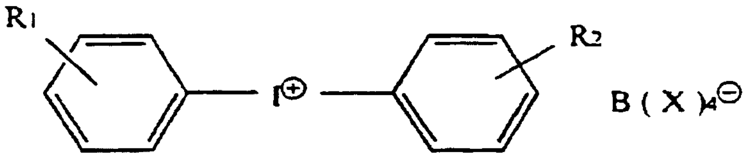

(1)

X: $C_6F_5$, $C_6H_{4p}OCF_3$, $C_6H_3(mCF_3)_2$
$R_1$, $R_2$: H oder eine Alkylgruppe

**2.** Elektrodenstrahl- oder Röntgenstrahl-härtbare Harzzusammensetzung gemäß Anspruch 1, worin die Menge des Polymerisationsstarters 0,01 bis 0,1 mol pro kg der Harzkomponente ist.

**3.** Elektrodenstrahl- oder Röntgenstrahl-härtbare Harzzusammensetzung gemäß Anspruch 1 oder 2, worin der Polymerisationsstarter ein solcher ist, in dem sowohl $R_1$ als auch $R_2$ in Formel (1) $C_{1-5}$-Alkylgruppen sind.

**4.** Elektrodenstrahl- oder Röntgenstrahl-härtbare Harzzusammensetzung gemäß Anspruch 1 oder 2, worin der Polymerisationsstarter (Tolylcumyl)jodonium-Tetrakis(pentafluorphenyl)borat ist, für das $R_1$ in Formel (1) eine Isopropylgruppe, $R_2$ eine Methylgruppe und X eine $C_6F_5$-Gruppe ist.

**5.** Prepreg erhältlich durch Imprägnieren einer Faserverstärkung mit einer Elektrodenstrahl- oder Röntgenstrahl-härtbaren Harzzusammensetzung, die eine Harzkomponente umfasst, welche ein Epoxyharz und/oder ein Oxetanharz, das eine Naphthalinstruktur oder eine Biphenylstruktur aufweist, einen Polymerisationsstarter der Formel (1) unten mit 0,005 bis 0,5 mol/kg der Harzkomponente, und ein Viskositätseinstellmittel umfasst, welches ein Phenoxyharz und/oder ein Polyethersulfonharz umfasst, die Harzzusammensetzung eine Viskosität bei 50°C in dem Bereich von 50 bis 400 Pa·s aufweist, wenn sie auf Grundlage einer dynamischen Viskoeleastizitätsmessung unter den Bedingungen einer Frequenz von 1 Hz und einer Spannung von 0,1° bestimmt wird

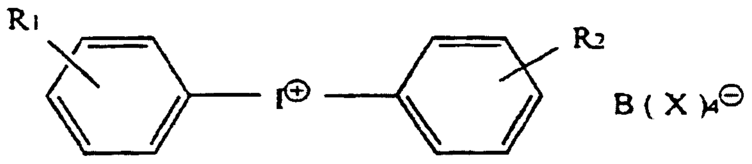

(1)

X: $C_6F_5$, $C_6H_{4p}OCF_3$, $C_6H_3(mCF_3)_2$ $R_1$, $R_2$: H oder eine Alkylgruppe

**6.** Prepreg gemäß Anspruch 7, worin die Menge des Polymerisationstarters 0,01 bis 0,1 mol pro kg der Harzkomponente ist.

7. Prepreg gemäß Anspruch 7 oder 8, worin der Polymerisationsstarter ein solcher ist, in dem sowohl $R_1$ als auch $R_2$ in Formel (1) $C_{1-5}$-Alkylgruppen sind.

8. Prepreg gemäß Anspruch 7 oder 8, worin der Polymerisationsstarter (Tolylcumyl)jodonium-Tetrakis(pentafluorphenyl)borat ist, für das $R_1$ in Formel (1) eine Isopropylgruppe, $R_2$ eine Methylgruppe und X eine $C_6F_5$-Gruppe ist.

## Revendications

1. Composition de résine durcissant par faisceau d'électrons ou rayons X comprenant un composant de résine comprenant une résine époxy et/ou une résine oxétane ayant une structure naphtalène ou une structure biphényle, un initiateur de polymérisation représenté par la formule (1) ci-dessous à raison de 0,005 à 0,5 mole par kg du composant de résine, et un agent d'ajustement de la viscosité comprenant une résine phénoxy et/ou une résine polyéther sulfone, la composition de résine ayant une viscosité à 50°C, lorsque déterminée sur la base d'une mesure de viscoélasticité dynamique dans les conditions d'une fréquence de 1 Hz et d'une traction de 0,1 degré, dans la gamme de 50 à 400 Pa·s.

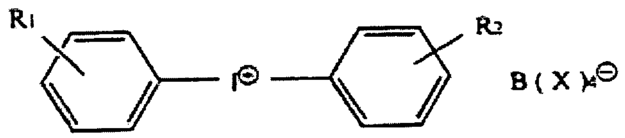

(1)

X: $C_6F_5$, $C_6H_{4p}OCF_3$, $C_6H_3(mCF_3)_2$ 2
$R_1$, $R_2$ : H ou un groupe alkyle.

2. Composition de résine durcissant par faisceau d'électrons ou rayons X selon la revendication 1, dans laquelle la quantité d'initiateur de polymérisation est de 0,01 à 0,1 mole par kg du composant de résine.

3. Composition de résine durcissant par faisceau d'électrons ou rayons X selon la revendication 1 ou 2, dans laquelle l'initiateur de polymérisation est un initiateur de polymérisation pour lequel à la fois $R_1$ et $R_2$ dans la formule (1) sont des groupes alkyle en $C_{1-5}$.

4. Composition de résine durcissant par faisceau d'électrons ou rayons X selon la revendication 1 ou 2, dans laquelle l'initiateur de polymérisation est le tétrakis(pentafluorophényl)borate de (tolylcumyl)iodonium, pour lequel $R_1$ dans la formule (1) est un groupe isopropyle, $R_2$ est un groupe méthyle, et X est un groupe $C_6F_5$.

5. Préimprégné obtenu par imprégnation d'un renfort fibreux avec une composition de résine durcissant par faisceau d'électrons ou rayons X comprenant un composant de résine comprenant une résine époxy et/ou une résine oxétane ayant une structure naphtalène ou une structure biphényle, un initiateur de polymérisation représenté par la formule (1) ci-dessous à raison de 0,005 à 0,5 mole par kg du composant de résine, et un agent d'ajustement de la viscosité comprenant une résine phénoxy et/ou une résine polyéther sulfone, la composition de résine ayant une viscosité à 50°C, lorsque déterminée sur la base d'une mesure de viscoélasticité dynamique dans les conditions d'une fréquence de 1 Hz et d'une traction de 0,1 degré, dans la gamme de 50 à 400 Pa·s.

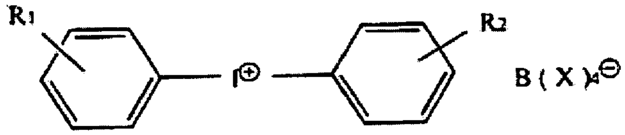

(1)

X: $C_6F_5$, $C_6H_{4p}OCF_3$, $C_6H_3(_mCF_3)_2$
$R_1$, $R_2$ : H ou un groupe alkyle.

**6.** Préimprégné selon la revendication 7, dans lequel la quantité d'initiateur de polymérisation est de 0,01 à 0,1 mole par kg du composant de résine.

**7.** Préimprégné selon la revendication 7 ou 8, dans lequel l'initiateur de polymérisation est un initiateur de polymérisation pour lequel à la fois $R_1$ et $R_2$ dans la formule (1) sont des groupes alkyles en $C_{1-5}$.

**8.** Préimprégné selon la revendication 7 ou 8, dans lequel l'initiateur de polymérisation est le tétrakis(pentafluorophényl) borate de (tolylcumyl)iodonium, pour lequel $R_1$ dans la formule (1) est un groupe isopropyle, $R_2$ est un groupe méthyle, et X est un groupe $C_6F_5$.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 11193322 A
- JP 2005248118 A
- JP 2002322268 A